# FASCICULE DE BREVET EUROPEEN

(11) **EP 1 193 820 B1**
(45) Date de publication et mention de la délivrance du brevet: **14.04.2004**
(21) Numéro de dépôt: 01490033.6
(22) Date de dépôt: 06.09.2001
(51) Int. Cl.: H02G 3/04

(54) **Support d'accessoires pour chemins à câbles et chemins à câbles comprenant de tels supports**
Zubehörteileträger für Kabelrinnen und damit ausgerüstete Kabelrinne
Accessories holder for cable trays and cable trays incorporating the same

(30) Priorité: 27.09.2000 FR 0012335
(43) Date de publication de la demande: 03.04.2002
(73) Titulaire: Tolmega, S.A., 62400 Bethune (FR)
(72) Inventeur: Colmart, André, 62290 Noeux Les Mines (FR)
(74) Mandataire: Hennion, Jean-Claude

(56) Documents cités:
- DE-A- 2 036 325
- DE-A- 3 139 287
- DE-U- 29 700 613

## Description

L'invention se rapporte au domaine technique des systèmes de support de câbles, notamment de câbles électriques et/ou de câbles de télécommunications ou équivalents.

On connaît dans l'art antérieur trois grands types de supports de câbles : les échelles à câbles, les chemins à câbles en treillis de fils, et les goulottes.

Par « chemins à câbles en treillis de fils » on désigne ici des chemins à câbles réalisés par assemblage de deux séries de fils, à savoir, une première série de fils, communément appelés fils de chaîne, courant longitudinalement, de manière typiquement rectiligne ou quasi rectiligne sur toute leur longueur ; et une deuxième série de fils, communément appelés fils de trame, établis transversalement, de place en place, le long de ces fils de chaîne.

Les fils de chaîne et les fils de trame sont le plus souvent en alliage métallique et leur assemblage est conventionnellement réalisé par soudage. Les fils de trame sont typiquement en U, de sorte que le chemin à câbles en treillis comprend un panneau de fond et deux panneaux latéraux, communément appelés ailes. Par « fils » on désigne ici aussi bien des profilés pleins de section transversale sensiblement ovale ou circulaire, que des profilés de section transversale carrée ou rectangulaire. Les fils de trame peuvent notamment se présenter sous forme de bandes étroites, de section transversale rectangulaire.

Des exemples de chemins à câbles en treillis de fil du type présenté ci-dessus peuvent être trouvés dans les documents suivants : demandes de brevet français publiées sous les numéros 2376539, 2576158, 2599906, 2613146, 2617341, 2628904, 2634600, 2645359, 2652206, 2652142, 2669708, 2686393, 2687207, 2691590, 2697313, 2697690, 2698416, 2706973, 2716242, 2716768, 2723270, 2725772, 2725846, 2727186, 2728649, 2734503, 2737355, 2750754, 2766897 ; demandes de brevet européen publiées sous les numéros 0191667, 0229544, 0275185, 0352191, 0355081, 0390668, 0418167, 0553039, 0556137, 0718944, 0818862, 0905843 ; demandes internationales de brevet publiées sous les numéros 96/08063, 99/06746 ; demandes de brevet allemands publiées sous les numéros 2036325, 4037412, 4336168.

Par « goulotte » on désigne ici les chemins à câbles formés par l'assemblage de profilés comprenant au moins une paroi formant fond et deux ailes, ces profilés présentant notamment des sections transversales en U ou en C. Les profilés des goulottes sont classiquement élaborés en matériau polymère, notamment extrudé, ou en alliage métallique. Les parois des goulottes peuvent être pleines ou perforées, et sont parfois configurées sur leur bord libre pour recevoir un couverde, par exemple par encliquetage.

Des exemples de goulottes du type présenté ci-dessus peuvent être trouvés dans les documents suivants : demandes de brevet en France publiées sous les numéros 1471497, 2290063, 2306552, 2313786, 2365902, 2383539, 2395449, 2406327, 2435844, 2478389, 2481015, 2536219, 2610145, 2610769, 2615587, 2683403, 2686142, 2689605, 2691227, 2691228, 2712831, 2734956, 2749912, 2749913, 2749914, 2769761, 2481015; demandes de brevet européen publiées sous les numéros 0054456, 0113981, 0208924, 0278923, 0292389, 0315531, 0348285, 0403440, 0518404, 0570272, 0657672, 0695009, 0813012 ; demande internationale de brevet publiée sous le numéro 93/23694.

Les échelles à câbles comprennent classiquement deux longerons sensiblement parallèles, entre lesquels s'étendent des échelons, parfois dénommés traverses ou barreaux transversaux, sur lesquels reposent les câbles, directement ou par le biais de supports intermédiaires.

Des exemples de telles échelles à câbles peuvent être trouvés dans les documents suivants : demandes de brevet en France publiées sous les numéros : 2226606, 2300887, 2478 891, 2588426, 2637349, 2640025, 2709528 ; demandes de brevet européen publiées sous les numéros 0119670, 0339699, 0372619, 0373021, 0542368, 0641964 ; demandes internationales de brevet publiées sous les numéros 84/04633, 88/04486, 90/13164, 91/00973, 97/15774, 99/53584 ; demande de brevet allemand publiée sous le numéro DE-2141849 ; brevets américains publiés sous les numéros 5465929, 5580014, 4319724.

L'invention concerne plus particulièrement un support de fixation d'accessoires sur des chemins à câbles, que ces chemins à câbles soient de type treillis de fils, goulottes, échelles à câbles ou conduits en tôles perforées.

L'invention vise à fournir un support de fixation pour accessoires qui soit tout à la fois facile à mettre en place, économique, et sûr.

A cette fin, l'invention se rapporte selon un premier aspect, à un support de fixation pour chemins à câbles, ce support comprenant une plaque rigide sur la face interne de laquelle saille une tige filetée ou une vis à collet carré, ce support étant pourvu d'une plaque déformable disposée en regard de la plaque rigide, cette plaque déformable ayant des bords ourlés venant en appui contre le pourtour de la face externe de la plaque rigide, la plaque déformable comprenant un axe de passage de la tige filetée ou de la vis à collet carré et étant apte à se trouver dans deux états extrêmes, à savoir un premier état extrême relâché, où cette plaque déformable est écartée de la face interne de la plaque rigide, et un deuxième état extrême tendu, où cette plaque déformable est en appui contre la face interne de la plaque rigide, le passage de l'état relâché à l'état tendu étant obtenu par vissage d'un écrou sur la tige filetée ou la vis à collet carré, le passage de l'état relâché à l'état tendu augmentant les dimensions extérieures de la plaque déformable.

Selon diverses réalisations, éventuellement combinées, ce support présente les caractères suivants :
- la plaque déformable comprend, à l'état relâché, deux pans inclinés s'étendant en regard de la face interne de la plaque rigide, de part et d'autre d'un plan perpendiculaire à cette plaque rigide et contenant l'axe de la tige filetée, ces deux plans définissant un angle A ouvert vers la face interne de la plaque rigide ;
- l'angle A est compris entre sensiblement 90° et 175° ;
- le support présente une symétrie d'ensemble par rapport à un plan perpendiculaire à la plaque rigide et contenant l'axe de la tige filetée.

L'invention se rapporte également à un chemin à câbles en treillis de fils conformément à la revendication 6 ainsi qu'à un chemin à câbles de type goulotte ou échelles à câbles conformément à la revendication 9.

D'autres objets et avantages de l'invention apparaîtront au cours de la description suivante de modes de réalisation, description qui va être effectuée en se référant aux dessins annexés, dans lesquels :
- la figure 1 est une vue latérale d'un support de fixation selon un premier mode de réalisation de l'invention ;
- la figure 2 est une vue analogue à la figure 1, après mise en place du support de fixation sur un chemin de câble en treillis de fils ;
- la figure 3 est une vue latérale d'un support de fixation selon un deuxième mode de réalisation de l'invention, le support de fixation étant représenté lors de son introduction dans une queue d'aronde contenante d'un chemin à câbles ;
- la figure 4 est une vue latérale du support de fixation représenté en figure 3, après serrage ;
- la figure 5 est une vue latérale d'un support de fixation selon un deuxième mode de réalisation ;
- la figure 6 est une vue arrière du support représenté en figure 5 ;
- les figures 7 et 8 sont des vues analogues aux figures 5 et 6 respectivement, après mise en place de l'écrou sur la vis à collet carré ;
- la figure 9 est une vue latérale d'un support de fixation, selon un troisième mode de réalisation ;
- la figure 10 est une vue arrière du support représenté en figure 9 ;
- la figure 11 est une vue latérale d'un support de fixation selon un troisième mode de réalisation ;
- la figure 12 est une vue arrière du support représenté en figure 11 ;
- les figures 13 et 14 sont des vues analogues aux figures 11 et 12, après mise en place de l'écrou de serrage sur la vis à collet carré.

Le support de fixation 1 comprend une plaque rectangulaire plane 2 ou à bords inclinés 2a sensiblement rigide sur une face de laquelle une tige filetée 3 ou une vis à collet carré 3a saille sensiblement perpendiculairement.

Le vissage d'un écrou 4 sur la tige filetée 3 ou la vis 3a provoque la déformation d'une plaque 5 assurant le blocage du support de fixation sur le chemin à câbles.

La plaque déformable 5 présente un profil transversal comprenant :
- un trou central traversant au travers duquel passe la tige filetée 3 ou la vis 3a ;
- de part et d'autre de ce trou central, deux pans inclinés 6,7 ;
- un bord libre courbe 8,9 en partie extrême libre de chacun de ces deux pans inclinés 6,7.

Le support de fixation 1, et notamment la plaque déformable 5, présente une symétrie par rapport à un plan T sensiblement perpendiculaire à la plaque rectangulaire 2 et disposé à mi distance entre les bords libres 10,11 de cette plaque 2.

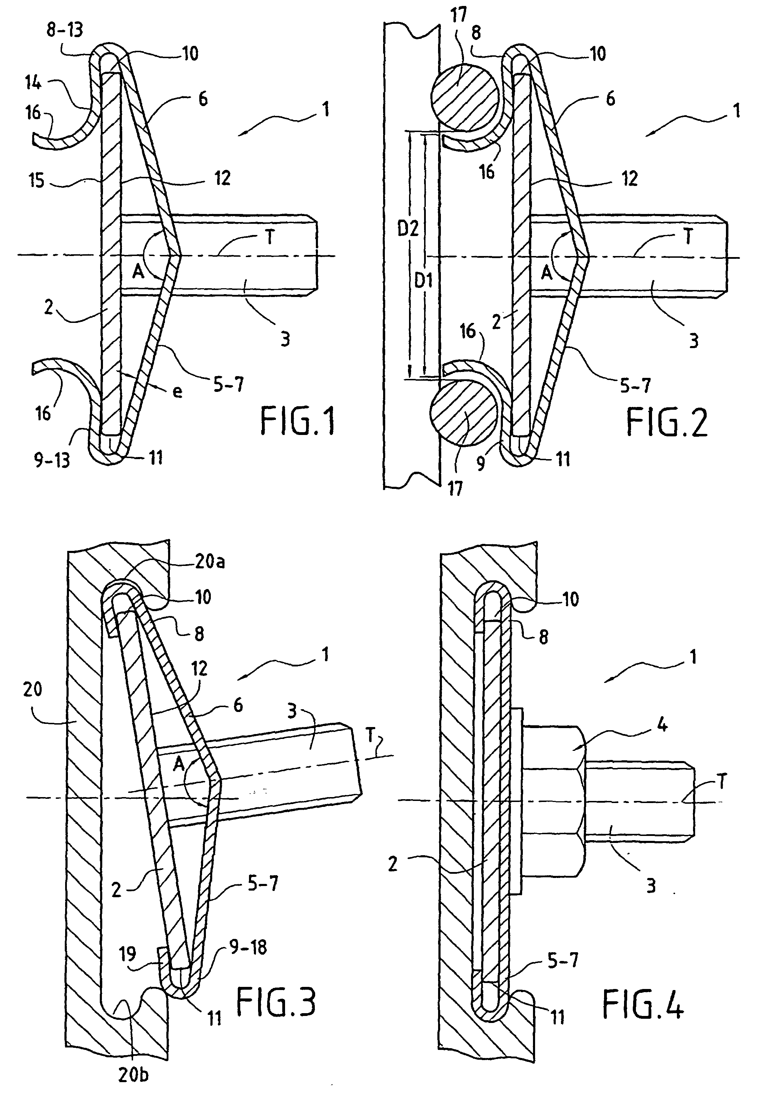

Avant vissage de l'écrou 4, ainsi qu'il est représenté en figures 1 à 3, les pans inclinés 6,7 de la plaque déformable 5 forment un angle A de moins de 175° entre eux, ouvert vers la plaque 2.

La valeur de l'angle A pourra être ajustée par l'homme du métier, en fonction du matériau employé pour la réalisation de la plaque 5, de l'épaisseur de cette plaque 5 et de la force de serrage admise pour l'écrou 4.

Lorsque l'écrou 4 est en position serrée, comme représentée en figure 4, les pans 6,7 sont sensiblement perpendiculaires à la tige filetée 3 et plaqués contre la face interne 12 de la plaque 2.

On se reporte maintenant plus particulièrement aux figures 1 et 2.

Dans ce premier mode de réalisation, les bords libres 8,9 de la plaque déformable 5 comprennent, au-delà des pans 6,7 :
- une première courbure 13 ;
- une section 14 plaquée contre les bords de la face externe 15 de la plaque rigide 2 ;
- une deuxième courbure 16, dont le rayon est sensiblement identique à celui des fils 17 d'un chemin à câbles en treillis de fils.

La mise en place du support de fixation représenté en figures 1 et 2 sur un chemin à câbles en treillis de fils s'effectue de la manière suivante.

Tout d'abord, les deuxièmes courbures 16 de la plaque déformable 5 sont placées entre deux fils de chaîne ou deux fils de trame du treillis de fil. Ces fils de chaîne ou de trame peuvent être disposés sur une aile ou sur la paroi de fond du chemin à câble, ou bien encore sur une paroi intermédiaire. Ces fils de chaîne ou de trame peuvent être distants du pas séparant deux fils de chaîne ou de trame quelconques du chemin à câbles. En variante, ces fils de chaîne ou de trame peuvent être distants de plus ou moins d'un pas. La distance D1 entre les courbures 16, avant vissage de l'écrou 4, est légèrement inférieure à la distance D2 séparant les deux fils entre lesquels le support de fixation doit être mis en place.

Dans une deuxième étape, l'écrou est vissé sur la tige filetée 3, ce qui conduit à la déformation de la plaque 5, cette déformation étant telle que l'angle A augmente et que, par voie de conséquence, la distance D1 entre les courbures 16 augmente, conduisant au blocage du support de fixation 1 sur le treillis de fils.

La fixation peut être effectuée en face interne ou en face externe de la paroi en treillis de fils.

On se reporte maintenant plus particulièrement aux figures 3 et 4.

Dans ce deuxième mode de réalisation, les bords libres 8,9 de la plaque déformable 5 comprennent, au delà des pans 6,7 :
- une courbure 18 ;
- une section 19 plaquée contre les bords de la face externe 15 de la plaque rigide 2.

La mise en place du support de fixation représenté en figures 3 et 4 sur un chemin à câbles en goulotte ou sur un longeron ou une traverse d'une échelle à câbles s'effectue de la manière suivante.

Tout d'abord, les courbures 18 de la plaque déformable 5 sont placées entre deux bords 20a,20b d'une queue d'aronde contenante 20. Cette queue d'aronde contenante peut être disposée sur une aile ou sur la paroi de fond du chemin à câble, ou bien encore sur une paroi intermédiaire.

Dans une deuxième étape, l'écrou est vissé sur la tige filetée 3, ce qui conduit à la déformation de la plaque 5, cette déformation étant telle que l'angle A augmente et que, par voie de conséquence, la distance entre les courbures 18 augmente, conduisant au blocage du support de fixation 1 dans la queue d'aronde contenante de la goulotte.

La queue d'aronde contenante peut être ouverte vers l'extérieur ou vers l'intérieur de la goulotte ou de l'échelle à câbles.

La tige filetée 3 forme goujon pour le montage d'accessoires, non représentés.

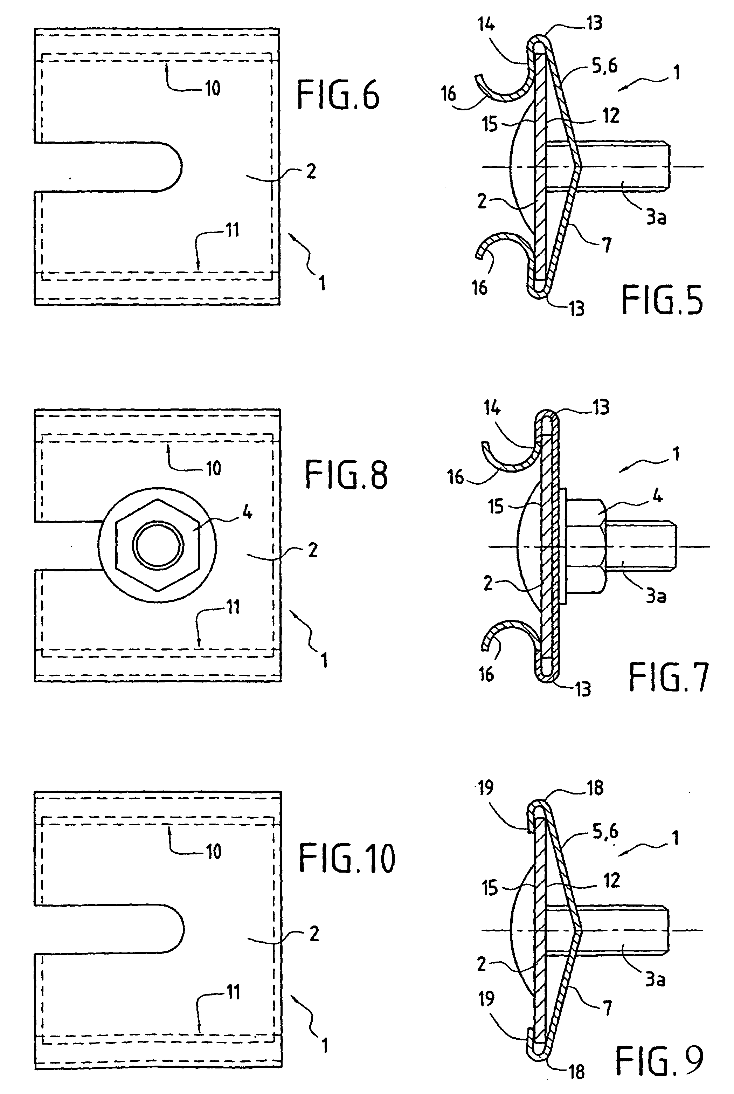

Le mode de réalisation des figures 5 à 8 est analogue à celui des figures 1 et 2, aux exceptions suivantes :
- une vis 3a à collet carré est montée sur la plaque 2, en lieu et place de la tige filetée 3 ;
- les parties extrêmes courbes 16 de la plaque déformable 5 sont recourbées sur 180°.

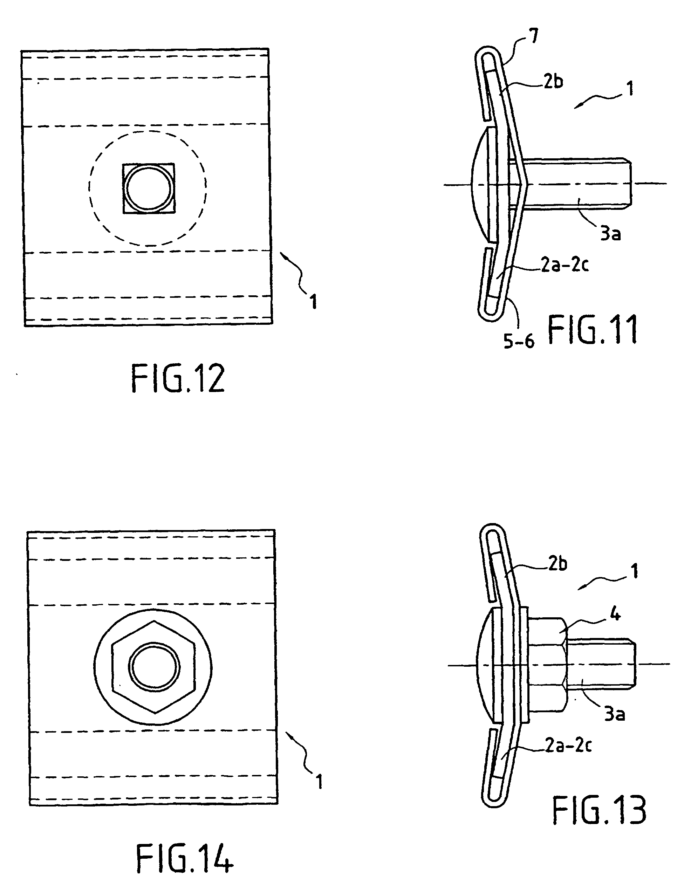

Dans le mode de réalisation des figures 11 à 14, la plaque 2a présente une partie centrale plane et deux bords latéraux inclinés 2b,2c, la plaque déformable étant placée en appui, après serrage de l'écrou 4, contre la partie centrale plane de la plaque 2a.

Le montage serré du support de fixation permet d'employer le support de fixation 1 comme support de borne de mise à la mise à la terre des chemins à câbles, la qualité du contact électrique étant assurée par l'effort de serrage du support de fixation sur le chemin à câbles.

## Revendications

1. Support de fixation pour chemins à câbles, ce support comprenant une plaque rigide (2) sur la face interne (12) de laquelle saille une tige filetée (3) ou une vis à collet carré, **caractérisé en ce qu'**il est pourvu d'une plaque déformable (5) disposée en regard de la plaque rigide (2), cette plaque déformable (5) ayant des bords ourlés (8,9) venant en appui contre le pourtour de la face externe (15) de la plaque rigide (2), la plaque déformable (5) comprenant un axe de passage de la tige filetée (3) ou de vis à collet carré et étant apte à se trouver dans deux états extrêmes, à savoir un premier état extrême relâché, où cette plaque déformable (5) est écartée de la face interne (12) de la plaque rigide (2), et un deuxième état extrême tendu, où cette plaque déformable (5) est en appui contre la face interne (12) de la plaque rigide (2), le passage de l'état relâché à l'état tendu étant obtenu par vissage d'un écrou (4) sur la tige filetée (3) ou la vis à collet carré, le passage de l'état relâché à l'état tendu augmentant les dimensions extérieures de la plaque déformable (5).

2. Support selon la revendication 1, **caractérisé en ce que** la plaque déformable (5) comprend, à l'état relâché, deux pans inclinés (6,7) s'étendant en regard de la face interne (12) de la plaque rigide (2), de part et d'autre d'un plan (T) perpendiculaire à cette plaque rigide (2) et contenant l'axe de la tige filetée (3), ces deux plans (6,7) définissant un angle (A) ouvert vers la face interne (12) de la plaque rigide (2).

3. Support selon la revendication 2, **caractérisé en ce que** l'angle (A) est compris entre sensiblement 90° et 175°.

4. Support selon la revendication 2 ou 3, **caractérisé en ce qu'**il présente une symétrie d'ensemble par rapport à un plan perpendiculaire à la plaque rigide (2) et contenant l'axe de la tige filetée (3).

5. Support selon l'une quelconque des revendications 1 à 4, **caractérisé en ce que** les bords libres (8,9) de la plaque déformable (5) comprennent, au delà des pans (6,7) :
- une première courbure (13) ;
- une section (14) plaquée contre les bords de la face externe (15) de la plaque rigide (2) ;
- une deuxième courbure (16).

6. Chemin à câbles en treillis de fils, **caractérisé en ce qu'**il comprend au moins un support tel que présenté dans la revendication 5, les deuxièmes courbures (16) de la plaque déformable (5) étant placées entre deux fils de chaîne ou deux fils de trame du treillis de fil.

7. Chemin à câbles selon la revendication 6, **caractérisé en ce que** la distance (D1) entre les deuxièmes courbures (16), avant vissage d'un écrou (4) sur la tige filetée (3), est légèrement inférieure à la distance (D2) séparant les deux fils entre lesquels le support de fixation doit être mis en place, le serrage d'un écrou (4) sur la tige filetée (3) conduisant à la déformation de la plaque (5), cette déformation étant telle que la distance (D1) entre les courbures (16) augmente, conduisant au blocage du support de fixation (1) sur le treillis de fils.

8. Support selon l'une quelconque des revendications 1 à 4, **caractérisé en ce que** les bords libres (8,9) de la plaque déformable (5) comprennent :
- - une courbure (18) ;
- une section (19) plaquée contre les bords de la face externe (15) de la plaque rigide (2).

9. Chemin à câbles de type goulotte ou échelles à câbles, **caractérisé en ce qu'**il comprend au moins un support tel que présenté en revendication 8, les courbures (18) de la plaque déformable (5) étant placées entre deux bords (20a,20b) d'une queue d'aronde contenante (20) disposée sur une paroi de ce chemin à câbles.

10. Chemin à câbles selon la revendication 9, **caractérisé en ce que**, lors du vissage de l'écrou sur la tige filetée, la plaque (5) est déformée de manière telle que la distance entre les courbures 18 augmente, conduisant au blocage du support de fixation (1) dans la queue d'aronde contenante de la goulotte.

## Claims

1. Fixing support for cable trays, this support consisting of a rigid plate (2) on the inside face (12) of which there projects a threaded rod (3) or a square collared bolt, **characterised in that** it is provided with a deformable plate (5) arranged opposite the rigid plate (2), this deformable plate (5) having lap-joint edges (8, 9) which are supported against the periphery of the outer face (15) of the rigid plate (2), the deformable plate (5) having a through centreline for the threaded rod (3) or square collared bolt and being capable of taking up two extreme states, i.e. a first relaxed extreme state, where this deformable plate (5) is at a distance from the inside face (12) of the rigid plate (2), and a second taut extreme state, where this deformable plate (5) is supported against the inside face (12) of the rigid plate (2), the changeover from the relaxed state to the taut state being achieved by screwing a nut (4) on the threaded rod (3) or the square collared bolt, the changeover from the relaxed state to the taut state increasing the outside dimensions of the deformable plate (5).

2. Support according to Claim 1, **characterised in that** the deformable plate (5) has, in the relaxed state, two inclined faces (6, 7) extending opposite the inside face (12) of the rigid plate (2), on either side of a plane (T) perpendicular to this rigid plate (2) and containing the centreline of the threaded rod (3), these two planes (6, 7) defining an angle (A) open towards the inside face (12) of the rigid plate (2).

3. Support according to Claim 2, **characterised in that** the angle (A) is included more or less between 90° and 175°.

4. Support according to Claim 2 or 3, **characterised in that** it has an overall symmetry in relation to a plane perpendicular to the rigid plate (2) and containing the centreline of the threaded rod (3).

5. Support according to any one of the Claims 1 to 4, **characterised in that** the free edges (8, 9) of the deformable plate (5) comprise the following, beyond the sections (6, 7):
- a first curvature (13);
- a section (14) laid against the edges of the outer face (15) of the rigid plate (2);
- a second curvature (16).

6. Wire mesh cable tray, **characterised in that** it comprises at least one support as explained in Claim 5, the second curvatures (16) of the deformable plate (5) being placed between two warp wires or two weft wires of the wire mesh.

7. Cable tray according to Claim 6, **characterised in that** the distance (D1) between the second curvatures (16), before screwing a nut (4) on the threaded rod (3), is slightly shorter that the distance (D2) separating the two wires between which the fixing support has to be fitted, the tightening of a nut (4) on the threaded rod (3) leading to deformation of the plate (5), this deformation being such that the distance (D1) between the curvatures (16) increases, leading to locking of the fixing support (1) on the wire mesh.

8. Support according to any one of the Claims 1 to 4, **characterised in that** the free edges (8, 9) of the deformable plate (5) consist of:
- a curvature (18);
- a section (19) laid against the edges of the outer face (15) of the rigid plate (2).

9. Cable tray of the cable channel or ladder type, **characterised in that** it has at least one support as covered in Claim 8, the curvatures (18) of the deformable plate (5) being placed between two edges (20a, 20b) of a containing dovetail (20) arranged on one wall of this cable tray.

10. Cable tray according to Claim 9, **characterised in that**, when the nut is being screwed onto the threaded rod, the plate (5) is deformed in such a way that the distance between the curvatures (18) increases, leading to locking the fixing support (1) in the containing dovetail of the channel.

## Patentansprüche

1. Fixierungsträger für Kabelrinnen, der umfasst eine starre Platte (2), von deren innerer Oberfläche (12) eine Schraubenspindel (3) oder eine Vierkantflanschschraube vorsteht, **dadurch gekennzeichnet, dass** er ausgestattet ist mit einer verformbaren Platte (5), die der starren Platte (2) gegenüberliegend angeordnet ist, wobei diese verformbare Platte (5) Umfassungsränder (8, 9) aufweist, die sich an den äußeren Umfang der äußeren Oberfläche (15) der starren Platte (2) anlegen, wobei die verformbare Platte (5) eine Durchgangsachse für die Schraubenspindel (3) oder für die Vierkantflanschschraube aufweist und in zwei Endzuständen vorliegen kann, d.h. in einem ersten entspannten Endzustand, in dem die verformbare Platte (5) einen Abstand von der inneren Oberfläche (12) der starren Platte (2) aufweist, und in einem zweiten gespannten Endzustand, in dem die verformbare Platte (5) auf der inneren Oberfläche (12) der starren Platte (2) aufliegt, wobei der Übergang von dem entspannten Zustand in den gespannten Zustand erzielt wird durch Aufschrauben einer Mutter (4) auf die Schraubenspindel (3) oder die Vierkantflanschschraube, wobei durch den Übergang von dem entspannten Zustand in den gespannten Zustand die äußeren Dimensionen der verformbaren Platte (5) vergrößert werden.

2. Träger nach Anspruch 1, **dadurch gekennzeichnet, dass** die verformbare Platte (5) im entspannten Zustand zwei schräge Flächen (6, 7) umfasst, die sich gegenüber der inneren Oberfläche (12) der starren Platte (2)? beiderseits einer Ebene (T) senkrecht zu dieser starren Platte (2) erstrecken und die Achse der Schraubenspindel (3) enthalten, wobei diese beiden Flächen (6, 7) einen zu der inneren Oberfläche (12) der starren Platte (2) hin offenen Winkel (A) begrenzen.

3. Träger nach Anspruch 2, **dadurch gekennzeichnet, dass** der Winkel (A) einen Wert im Wesentlichen zwischen 90 und 175 ° hat.

4. Träger nach Anspruch 2 oder 3, **dadurch gekennzeichnet, dass** er eine Gesamt-Symmetrieebene, bezogen auf eine Ebene senkrecht zu der starren Platte (2) aufweist und die Achse der Schraubenspindel (3) enthält.

5. Träger nach einem der Ansprüche 1 bis 4, **dadurch gekennzeichnet, dass** die freien Ränder (8, 9) der verformbaren Platte (5) über die Flächen (6, 7) hinaus umfassen:
- eine erste Biegung (Bogen) (13);
- einen Abschnitt (14), der auf den Rändern der äußeren Oberfläche (15) der starren Platte (2) aufliegt;
- eine zweige Biegung (Bogen) (16).

6. Kabelrinne in Form eines Drahtgeflechtes, **dadurch gekennzeichnet, dass** sie mindestens einen Träger aufweist, wie er in Anspruch 5 beschrieben ist, wobei die beiden Biegungen (16) der verformbaren Platte (5) zwischen zwei Kettdrähten oder zwei Schussdrähten des Drahtgeflechts angeordnet sind.

7. Kabelrinne nach Anspruch 6, **dadurch gekennzeichnet, dass** der Abstand (D1) zwischen den beiden Biegungen (16) vor dem Aufschrauben einer Mutter (4) auf die Schraubenspindel (3) geringfügig kleiner ist als der Abstand (D2), der die beiden Drähte, zwischen denen der Fixierungsträger angeordnet werden soll, voneinander trennt, wobei das Anziehen einer Schraube (4) auf der Schraubenspindel (3) zu einer Verformung der Platte (5) führt, wobei diese Verformung so ist, dass der Abstand (D1) zwischen den Biegungen (16) zunimmt, was zu einer Arretierung des Fixierungsträgers (1) auf dem Drahtgeflecht führt.

8. Träger nach einem der Ansprüche 1 bis 4, **dadurch gekennzeichnet, dass** die freien Ränder (8, 9) der verformbaren Platte (5) umfassen:
- eine Biegung (Bogen) (18);
- einen Abschnitt (19), der auf dem Rand der äußeren Oberfläche (15) der starren Platte (2) aufliegt.

9. Kalbelrinne vom Kabel-Wannen- oder Kabel-leiter-Typ, **dadurch gekennzeichnet, dass** sie mindestens einen Träger umfasst, wie er in Anspruch 8 beschrieben ist, wobei die Biegungen (18) der verformbaren Platte (5) zwischen zwei Rändern (20a, 20b) eines schwalbenschwanzförmigen Behälters (20) angeordnet ist, der auf einer Wand dieser Kalbelrinne angeordnet ist.

10. Kalbelrinne nach Anspruch 9, **dadurch gekennzeichnet, dass** beim Aufschrauben der Mutter auf die Schraubenspindel die Platte (5) so verformt wird, dass der Abstand zwischen den beiden Biegungen (18) zunimmt, was zu einer Arretierung des Fixierungsträgers (1) in dem schwalbenschwanzförmigen Behälter der Wanne führt.
